# EUROPEAN PATENT APPLICATION

(11) **EP 1 291 748 A2**
(43) Date of publication of application: **12.03.2003**
(21) Application number: 02018821.5
(22) Date of filing: 23.08.2002
(51) Int. Cl.: G06F 1/00

(54) **Electronic device capable of wirelessly transmitting a password that can be used to unlock/lock a password protected electronic device**

(30) Priority: 11.09.2001 US 952003
(71) Applicant: ALCATEL, 75008 Paris (FR)
(72) Inventor: Stevens, Gilman R., Fairview, TX 75069 (US); Mani, Babu V., Plano, TX 75025 (US)
(74) Representative: Schäfer, Wolfgang, Dipl.-Ing.

(57) **Abstract**

An electronic device is described which can be used by a user to unlock a locked password protected electronic device (e.g., PDA, wireless phone, laptop computer, personal computer...). To unlock the locked password protected electronic device, the user activates the electronic device to wirelessly transmit a password (e.g., electronic key) towards the locked password protected electronic device. The locked password protected electronic device uses the received password to unlock itself so that the user does not have to remember the password and also does not have to physically input the password into the locked password protected electronic device in order to unlock and use the password protected electronic device. The electronic device can also be used by the user to lock an unlocked password protected electronic device. Moreover, the electronic device can be incorporated within an article that the user generally has in his/her possession including a ring or a watch.

## Description

### BACKGROUND OF THE INVENTION

### Field of the Invention

The present invention relates in general to an electronic device capable of using wireless technology to transmit a password that can be used to unlock/lock a password protected electronic device.

### Description of Related Art

Today personal digital assistants (PDAs), laptop computers, wireless phones, personal computers and other electronic devices often have a password protection feature that prevents an unauthorized user from using the password protected electronic device. The traditional password protection feature requires a user to physically enter a password into the password protected electronic device before they can use the password protected electronic device. One problem with the traditional password protection feature is that the user can easily forget the password needed to unlock the password protected electronic device. Of course, if the user forgets the password they cannot unlock and use the password protected electronic device. It is easy for the user to forget the password, because they can simply confuse this password with all the other passwords they need to remember in order to access things such as ATM machines, Internet sites and other password protected electronic devices.

Another problem with the traditional password protection feature is that it can be physically difficult for the user to enter the password into the password protected electronic device. For instance, the user of a PDA must use a small pen to enter a password into the PDA which is difficult because there is a good chance the user will make a mistake by hitting a wrong key. In other words, it is just plain hard and time consuming for a user to unlock a PDA using a small pen. Accordingly, there has been a need for an electronic device that helps a user to unlock a password protected electronic device. This need and other needs are satisfied by the electronic device of the present invention.

### BRIEF DESCRIPTION OF THE INVENTION

The present invention includes an electronic device that can be used by a user to unlock a locked password protected electronic device (e.g., PDA, wireless phone, laptop computer, personal computer...). To unlock the locked password protected electronic device, the user activates the electronic device to wirelessly transmit a password (e.g., electronic key) towards the locked password protected electronic device. The locked password protected electronic device uses the received password to unlock itself so that the user does not have to remember the password and also does not have to physically input the password into the locked password protected electronic device in order to unlock and use the locked password protected electronic device. The electronic device can also be used by the user to lock an unlocked password protected electronic device. Moreover, the electronic device can be incorporated within an article that the user generally has in his possession including a ring or a watch.

### BRIEF DESCRIPTION OF THE DRAWINGS

A more complete understanding of the present invention may be had by reference to the following detailed description when taken in conjunction with the accompanying drawings wherein:
FIGURE 1 is a block diagram illustrating the basic components of a system in accordance with the present invention;
FIGURE 2 is a block diagram illustrating in greater detail a first embodiment of an electronic device of the system shown in FIGURE 1;
FIGURES 3A and 3B are block diagrams illustrating in greater detail a second embodiment of the electronic device of the system shown in FIGURE 1;
FIGURE 4 is a block diagram illustrating in greater detail a third embodiment of the electronic device of the system shown in FIGURE 1;
FIGURE 5 is a block diagram illustrating in greater detail a fourth embodiment of the electronic device of the system shown in FIGURE 1; and
FIGURE 6 is a flowchart illustrating the basic steps of a preferred method in accordance with the present invention.

### DETAILED DESCRIPTION OF THE DRAWINGS

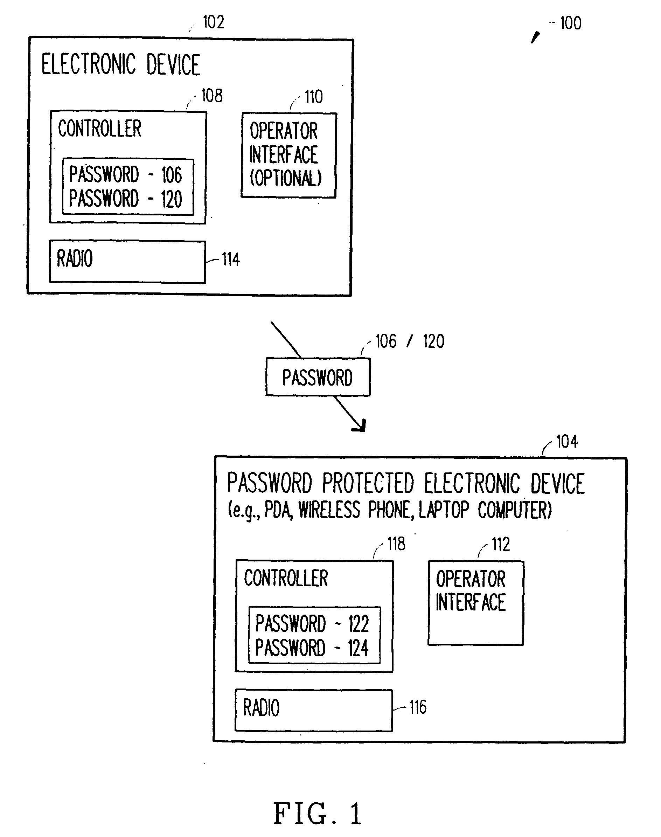

Referring to FIGURE 1, there is a block diagram illustrating the basic components of the preferred system 100 in accordance with the present invention. The system 100 includes an electronic device 102 and a password protected electronic device 104. Basically, the user can activate the electronic device 102 (e.g., wireless electronic key transmitter, electronic key device) to wirelessly transmit a password 106 (e.g., electronic key) to a locked password protected electronic device 104. The locked password protected electronic device 104 uses the received password 106 to unlock itself so that the user does not have to remember the password 106 and also does not have to physically input the password 106 into the password protected electronic device 104 in order to unlock and use the password protected electronic device 104. The password protected electronic device 104 can be any type of electrical device including, for example, a personal digital assistant (PDA), a laptop computer, a wireless phone and a personal computer. The electronic device 102 can be incorporated within an article that the user generally has in his possession including, for example, a ring or a watch.

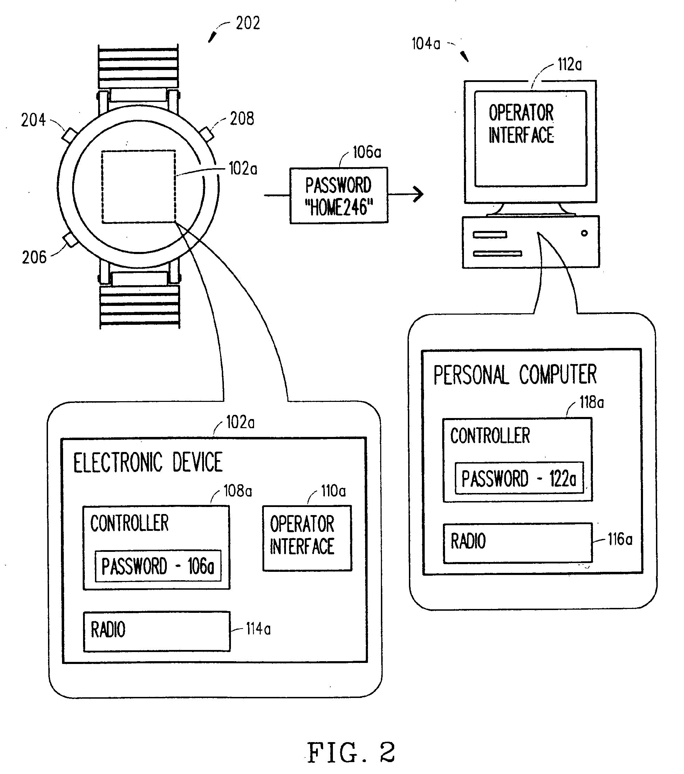

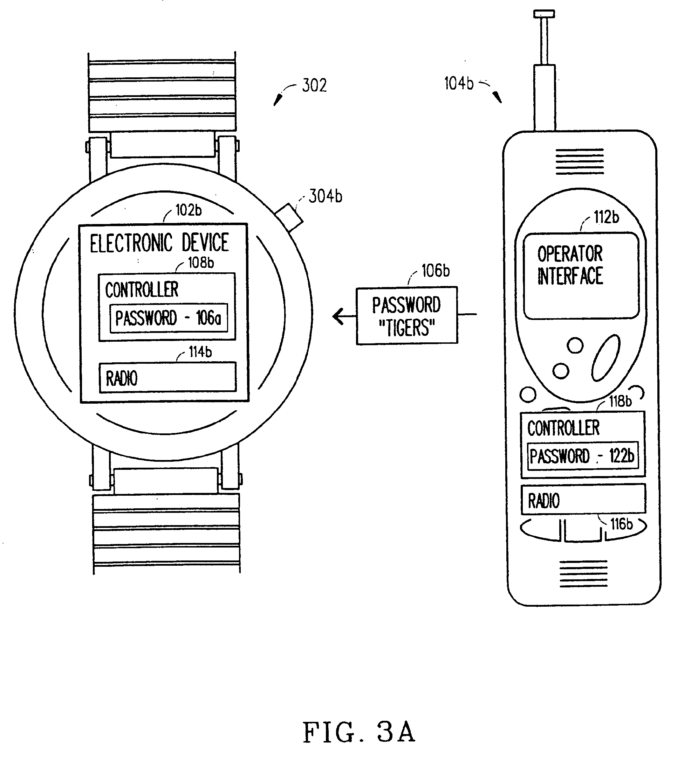

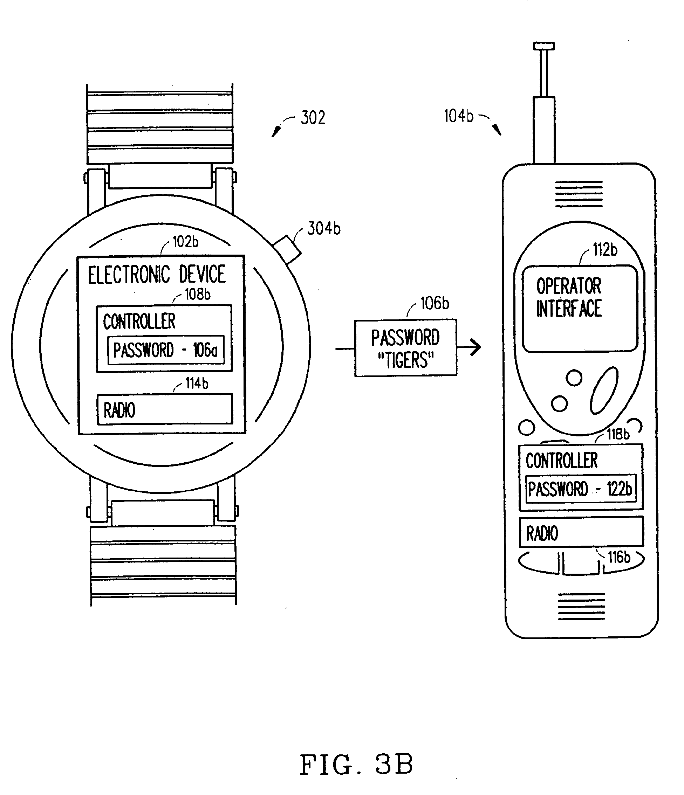

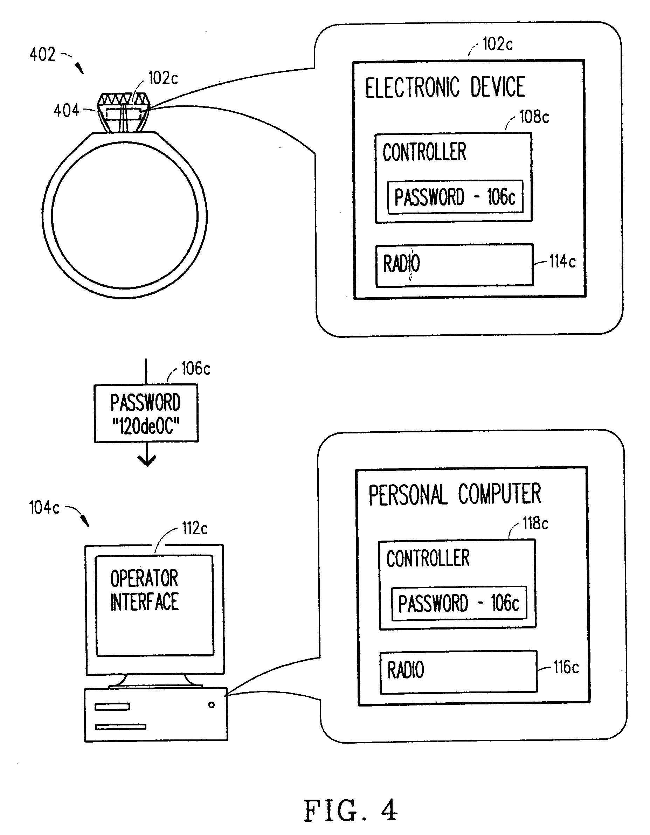

The electronic device 102 includes a controller 108 that stores the password 106. There are several different ways in which a user or a manufacturer can select the password 106 and to input the selected password 106 into the controller 108. For example in the first embodiment, the user can interact with an operator interface 110 on the electronic device 102 to select the password 106 and to input the selected password 106 into the electronic device 102 (see FIGURE 2). In the second embodiment, the user can interact with an operator interface 112 on the password protected electronic device 104 to select the password 106 and direct the password protected electronic device 104 to transmit the selected electronic key 106 to the electronic device 102 (see FIGURES 3A and 3B). In the third embodiment, a manufacturer of the electronic device 102 and the password protected electronic device 104 can select the password 106 and input the password 106 into the electronic device 102 and the password protected electronic device 104 (see FIGURE 4).

To unlock a locked password protected electronic device 104, the user activates the electronic device 102 to wirelessly transmit the password 106 towards the locked password protected electronic device 104. In particular, the electronic device 102 includes a radio 114 (e.g., transmitter and receiver) that wirelessly transmits the password 106 towards the password protected electronic device 104.

The password protected electronic device 104 includes a radio 116 (e.g., transmitter and receiver) which receives the password 106 transmitted from the radio 114. The password protected electronic device 104 also includes a controller 118 that has stored therein a password 122 which is compared to the password 106 received from the electronic device 102. If there is a match, then the password protected electronic device 104 unlocks itself so that the user is able to use the password protected electronic device 104. Otherwise, if there is not a match, then the password protected electronic device 104 does not unlock itself and the user is not able to use the password protected electronic device 104.

Typically, the user activates the electronic device 102 to transmit the password 106 when the electronic device 102 is located relatively near the locked password protected electronic device 104. Preferably, the electronic device 102 uses a short-range radio frequency communication technology to transmit the password 106 towards the locked password protected electronic device 104. As such, the electronic device 102 can transmit the password 106 towards the locked password protected electronic device 104 using any one of a wide array of wireless technologies including, for example, Bluetooth technology and Infra Red technology.

In addition the user can use the electronic device 102 to lock an unlocked password protected electronic device 104, to do this the user activates the electronic device 102 to wirelessly transmit a second password 120 (e.g., electronic key) towards the unlocked password protected electronic device 104. In particular, the user activates the radio 114 (e.g., transmitter and receiver) to wirelessly transmits the second password 120 towards the password protected electronic device 104. The radio 116 within the password protected electronic device 104 receives the second password 120 transmitted from the radio 114 within the electronic device 102. The controller 118 within the password protected electronic device 104 has stored therein another password 124 which is compared to the second password 120 received from the electronic device 102. If there is a match, then the password protected electronic device 104 locks itself so that the user is not able to use the password protected electronic device 104. Otherwise, if there is not a match, then the password protected electronic device 104 does not lock itself and the user is still able to use the password protected electronic device 104. It should be understood that the first password 106 and the second password 120 can be the same such that if the password protected electronic device 104 receives the first password 106 its state can change from locked-to-unlocked or unlocked-to-locked.

This way of unlocking/locking a password protected electronic device 104 is an improvement over the state-of-the-art because the user can use the electronic device 102 to unlock/lock the password protected electronic device 104 instead of having to remember password(s) and without having to physically input the password(s) into the password protected electronic device 104 in order to unlock/lock the password protected electronic device 104.

It should also be noted that certain details associated with the radios 114 and 116 and the controllers 108 and 118 are known in the industry and as such need not be described in detail herein. Therefore, for clarity, the description provided herein in relation to the radios 114 and 116 and the controllers 108 and 118 omits some components not necessary to understand the invention. However, detailed descriptions about the different embodiments of the electrical device 102 are provided below with respect to FIGURES 2-5.

Referring to FIGURE 2, there is a block diagram illustrating in greater detail a first embodiment of the electronic device 102a. In this embodiment, the user interacts with the operator interface 110a to select the password 106a and to input the selected password 106a into the electronic device 102a (shown incorporated within a watch 202).

The operator interface 110a can display a set of alphanumerics from which the user by pushing a button 204 or moving a knob (not shown) can select any one and any number of the alphanumerics to create the password 106a (e.g., password "HOME246"). The user can then push another button 206 or move the knob in a predetermined way to store the selected password 106a (e.g., password "HOME246") in the controller 108a. The user would also interact with the operator interface 112a on the password protected electronic device 104a (shown as a personal computer) to input and store therein the password 122a (e.g., password "HOME246").

Thereafter, when the user wants to use the locked password protected electronic device 104a, they would press another button 208 or move a knob in a certain way such that the electronic device 102a is activated to wirelessly transmit the password 106a (e.g., password "HOME246") towards the locked password protected electronic device 104a. As mentioned above, the electronic device 102a preferably uses a short-range radio frequency communication technology (e.g., Bluetooth technology, Infra Red technology) to transmit the password 106a (e.g., password "HOME246") to the locked password protected electronic device 104a. The controller 118a within the locked password protected electronic device 104a compares the received password 106a (e.g., password "HOME246") to the stored password 122a (e.g., password "HOME246"). If there is a match, then the password protected electronic device 104a unlocks itself so that the user is able to use the password protected electronic device 104a. Otherwise, if there is not a match, then the password protected electronic device 104a does not unlock itself and the user is not able to use the password protected electronic device 104a.

It should also be noted that the user can also use the electronic device 102a to transmit a second password (not shown) in a similar manner to lock the unlocked password protected electronic device 104a when they are done using the unlocked password protected electronic device 104a.

Referring to FIGURES 3A and 3B, there are respectively shown two block diagrams illustrating in greater detail a second embodiment of the electronic device 102b. In this embodiment, the user interacts with the operator interface 112b on the password protected electronic device 104b (shown as a wireless phone) to select the password 106b (e.g., password "TIGERS"). The user then directs the password protected electronic device 104b to transmit the selected electronic key 106b (e.g., password "TIGERS") to the electronic device 102b (shown incorporated in a watch 302) (see FIGURE 3A). At this point, the controllers 108b and 118b respectively have stored therein the password 106b and 122b.

Thereafter, when the user wants to use the locked password protected electronic device 104b, they would press a button (not shown) or move a knob 304b in a certain way (e.g., clock-wise direction) such that the radio 114b in the electronic device 102b is activated to wirelessly transmit the password 106b (e.g., password "TIGERS") towards the radio 116b within the password protected electronic device 104b (see FIGURE 3B). Again, the electronic device 102b preferably uses a short-range radio frequency communication technology (e.g., Bluetooth technology, Infra Red technology) to transmit the password 106b (e.g., password "TIGERS") to the locked password protected electronic device 104b. The controller 118b within the locked password protected electronic device 104b compares the received password 106b (e.g., password "TIGERS") to the stored password 122b (e.g., password "TIGERS"). If there is a match, then the password protected electronic device 104b unlocks itself so that the user is able to use the password protected electronic device 104b. Otherwise, if there is not a match, then the password protected electronic device 104b does not unlock itself and the user is not able to use the password protected electronic device 104b.

It should be noted that the electronic device 102b (or any other embodiments of the electronic devices 102) could be set in a locked mode to prevent accidental transmittal of the password towards password protected electronic devices 104.

It should also be noted that the user can also use the electronic device 102b to transmit a second password (not shown) in a similar manner to lock the unlocked password protected electronic device 104b when they are done using the unlocked password protected electronic device 104b.

Compared to the first embodiment of the electronic device 102a, the electronic device 102b may not require an operator interface (not shown). Because, the electronic device 102b only needs to be able to receive and store a password and then enable the user to activate the electronic device 102b so that the radio 114b transmits the password when they want to unlock/lock the password protected electronic device 104b.

Referring to FIGURE 4, there is shown a block diagram illustrating in greater detail a third embodiment of the electronic device 102c. In this embodiment, the user need not select the password 106c or input the password 106c into the electronic device 102c (shown incorporated within a ring 402). Instead, a manufacturer of the electronic device 102c and the password protected electronic device 104c (shown as a personal computer) can pre-program the password 106c (e.g., password "120de0C") into each device 102c and 104c. The manufacturer could sell the electronic device 102c and the password protected electronic device 104c as a pair to the user.

Thereafter, when the user wants to use the locked password protected electronic device 104c, they only need to move a knob 404 (shown as a rock) on the electronic device 102c in a certain way (i.e., clock-wise direction) such that the electronic device 102c is activated to wirelessly transmit the password 106c (e.g., password "120de0C") towards the password protected electronic device 104c. Again, the electronic device 102c preferably uses a short-range radio frequency communication technology (e.g., Bluetooth technology, Infra Red technology) to transmit the password 106c (e.g., password "120d ") to the locked password protected electronic device 104c. The controller 118c within the locked password protected electronic device 104c compares the received password 106c (e.g., password "120de0C ") to the stored password 106c (e.g., password "120de0C "). If there is a match, then the password protected electronic device 104c unlocks itself so that the user is able to use the password protected electronic device 104c. Otherwise, if there is not a match, then the password protected electronic device 104c does not unlock itself and the user is not able to use the password protected electronic device 104c.

It should also be noted that the user can also use the electronic device 102c to transmit a second password (not shown) in a similar manner to lock the unlocked password protected electronic device 104c when they are done using the unlocked password protected electronic device 104c.

Like the second embodiment of the electronic device 102b, the electronic device 102c does not require the operator interface (not shown). Because, the electronic device 102c only needs a knob or button of some sort to enable the user to activate the electronic device 102c so that it transmits a password when they want to unlock/lock the password protected electronic device 104c.

Following is an example of one possible application of the present invention, a PDA (e.g., password protected electronic device) and "special" watch (e.g., electronic device) can be sold as a pair to a person. The "special" watch can be programmed by the manufacturer (or person) to wirelessly transmit a particular password when a button is pushed by the person such that the transmitted password can be received by the password protected PDA. Upon receiving the password, the PDA can be unlocked and used by the person without having to physically input the password into the PDA. Of course, the PDA would have to be physically close to the "special" watch when the password is transmitted.

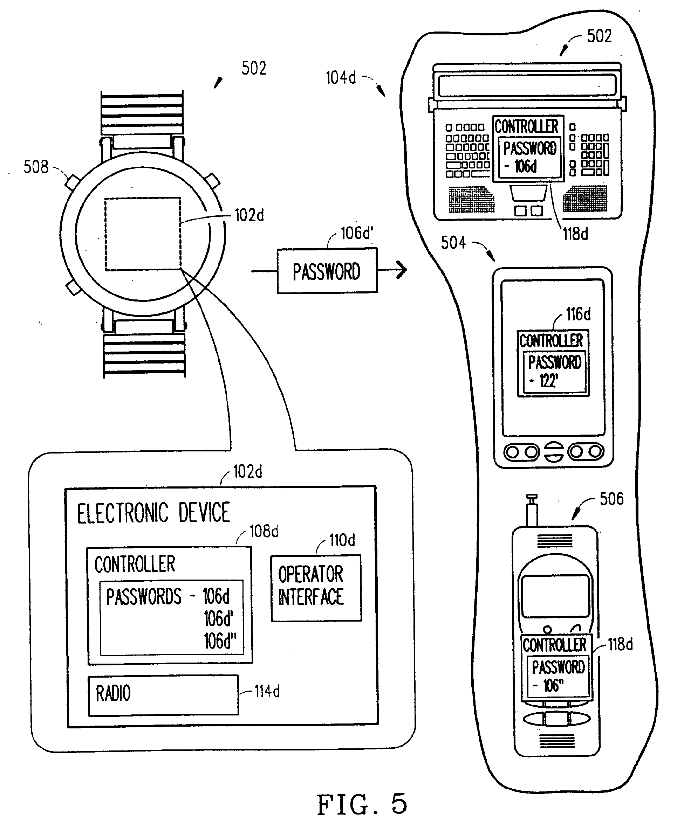

Referring to FIGURE 5, there is shown a block diagram illustrating in greater detail a fourth embodiment of the electronic device 102d. In this embodiment, the user can use the electronic device 102d (shown incorporated within a watch 502) to unlock/lock more than one password protected device 104d (shown are laptop computer 502, PDA 504 and wireless phone 506).

The user interacts with the operator interface 110d to select one or more passwords 106d, 106d' and 106d'' (only three shown) and to input the selected passwords 106d, 106d' and 106d'' into the controller 108d of the electronic device 102d. It should be noted that any of the other ways described above with respect to the second and third embodiments of the electronic device 102b and 102c can also be used to select and input the passwords 106d, 106d' and 106d'' into the electronic device 102d. Each password protected electronic device 104d and controller 118d is programmed to store their own password 106d, 106d' and 106d''.

Thereafter, when the user wants to use one of the locked password protected electronic devices 104d, they only need to press a button 508 or move a knob (not shown) in a certain way such that the electronic device 102d (e.g., radio 114d) is activated to wirelessly transmit one of the passwords 106d, 106d' and 106d'' towards one of the password protected electronic devices 104d. For instance, the user can activate the electronic device 102d so that it only transmits password 106d' towards the PDA 504 (as shown). Again, the electronic device 102d preferably uses a short-range radio frequency communication technology (e.g., Bluetooth technology, Infra Red technology) to transmit the password 106d' to the locked PDA 504. The controller 118d within the locked PDA 504 compares the received password 106d' to the stored password 122d'. If there is a match, then the PDA 504 unlocks itself so that the user is able to use the PDA 504. Otherwise, if there is not a match, then the PDA 504 does not unlock itself and the user is still not able to use the PDA 504.

It should be understood that the electronic device 102d could be programmed to store only one electronic key 106d that can be used to unlock/lock any number of password protected electronic devices 104d.

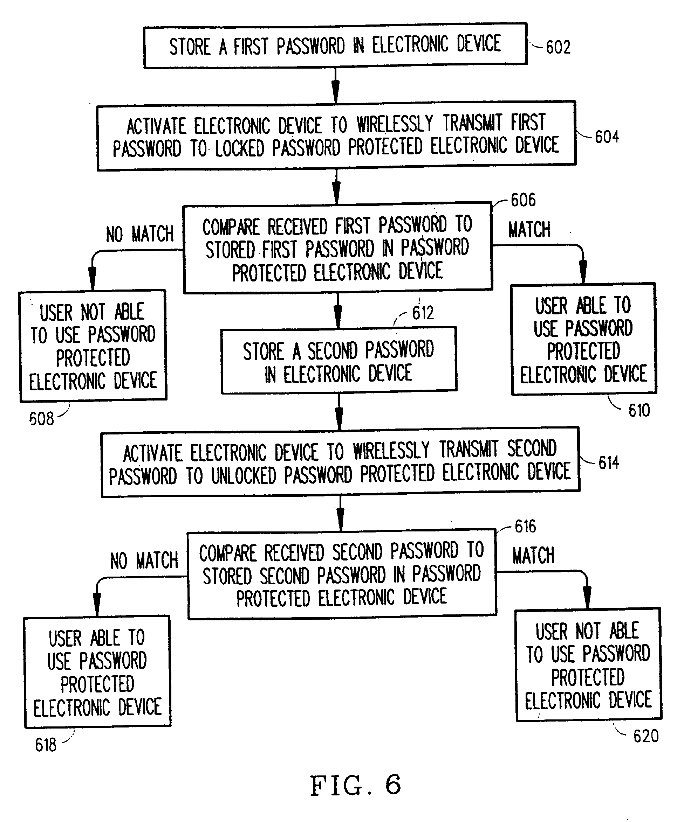

Referring to FIGURE 6, there is a flowchart illustrating the basic steps of a preferred method 600 in accordance with the present invention. Basically, the user can activate the electronic device 102 to wirelessly transmit a password 106 (e.g., electronic key) to a locked password protected electronic device 104. The locked password protected electronic device 104 uses the received password 106 to unlock itself so that the user does not have to remember the password 106 and also does not have to physically input the password 106 into the password protected electronic device 104 in order to unlock and use the password protected electronic device 104. Again, the password protected electronic device 104 can be any type of electrical device including, for example, a personal digital assistant (PDA), a laptop computer, a wireless phone and a personal computer. The electronic device 102 can be incorporated within an article that the user generally has in their possession including, for example, a ring or a watch.

Beginning at step 602, the electronic device 102 is programmed to store the password 106. There are several ways in which a user or a manufacturer can select the password 106 and input the selected password 106 into the electronic device 102. For example, the user can interact with the operator interface 110 on the electronic device 102 to select the password 106 and to input the selected electronic key 106 into the electronic device 102 (see FIGURE 2). Alternatively, the user can interact with the operator interface 112 on the password protected electronic device 104 to select the password 106 and direct the password protected electronic device 104 to transmit the selected password 106 to the electronic device 102 (see FIGURES 3A and 3B). Or, a manufacturer of the electronic device 102 and the password protected electronic device 104 can select the password 106 and input the selected password 106 into the electronic device 102 and the password protected electronic device (see FIGURE 4).

At step 604, the user activates the electronic device 102 to wirelessly transmit the password 106 towards the locked password protected electronic device 104. In particular, the user may push a button or move a knob in a certain direction to activate the electronic device 102 so that it transmits the password 106. Typically, the user activates the electronic device 102 to transmit the password 106 when the electronic device 102 is located relatively near the locked password protected electronic device 104. Preferably, the electronic device 102 uses a short-range radio frequency communication technology to transmit the password 106 towards the locked password protected electronic device 104. As such, the electronic device 102 can transmit the password 106 towards the locked password protected electronic device 104 using any one of a wide array of wireless technologies including, for example, Bluetooth technology and Infra Red technology.

At step 606, the locked password protected electronic device 104 compares the received password 106 to a stored password. If there is not a match, then at step 608, the password protected electronic device 104 does not unlock itself and the user is not able to use the password protected electronic device 104. If there is a match, then at step 610, the password protected electronic device 104 unlocks itself so that the user is able to use the password protected electronic device 104.

This way of unlocking the password protected electronic device 104 is an improvement over the state-of-the-art because the user can use the electronic device 102 to unlock the password protected electronic device 104 instead of having to remember a password and then having to physically input the password into the password protected electronic device 104 in order to unlock and use the password protected electronic device 104.

At step 612, the electronic device 102 is programmed to store the second password 120. Like described above, there are several ways in which the user or the manufacturer can select the second password 120 and input the selected second password 120 into the electronic device 102. For example, the user can interact with the operator interface 110 on the electronic device 102 to select the second password 120 and to input the selected password 106 into the electronic device 102 (see FIGURE 2). Alternatively, the user can interact with the operator interface 112 on the password protected electronic device 104 to select the second password 120 and direct the password protected electronic device 104 to transmit the selected second password 120 to the electronic device 102 (see FIGURES 3A and 3B). Or, a manufacturer of the electronic device 102 and the password protected electronic device 104 can select the second password 120 and input the selected second password 120 into the electronic device 102 and the password protected electronic device (see FIGURE 4).

At step 614, the user activates the electronic device 102 to wirelessly transmit the second password 120 towards the unlocked password protected electronic device 104. In particular, the user may push a button or move a knob in a certain direction to activate the electronic device 102 so that it transmits the second password 120. Like above, the user activates the electronic device 102 to transmit the second password 120 when the electronic device 102 is located relatively near the locked password protected electronic device 104. Preferably, the electronic device 102 uses a short-range radio frequency communication technology to transmit the second password 120 towards the unlocked password protected electronic device 104. As such, the electronic device 102 can transmit the second password 120 towards the unlocked password protected electronic device 104 using any one of a wide array of wireless technologies including, for example, Bluetooth technology and Infra Red technology.

At step 616, the unlocked password protected electronic device 104 compares the received second password 120 to a stored second password. If there is not a match, then at step 618, the password protected electronic device 104 does not lock itself and the user is still able to use the password protected electronic device 104. If there is a match, then at step 620, the password protected electronic device 104 locks itself so that the user is not able to use the password protected electronic device 104.

This way of locking the password protected electronic device 104 is an improvement over the state-of-the-art because the user can use the electronic device 102 to lock the password protected electronic device 104 instead of having to remember a password and then having to physically input the password into the password protected electronic device 104 in order to lock the password protected electronic device 104.

It should be understood that steps 602-610 are associated with a user trying to unlock a locked password protected electronic device 104, and steps 612-620 are associated with a user attempting to lock an unlocked password protected electronic device 104. The user may still physically enter the password(s) into the password protected electronic device 104 to unlock/lock the password protected electronic device 104.

It should also be understood that the first password 106 and the second password 120 can be one in the same. If this is the case, the password protected electronic device 104 would alternatively unlock and lock itself upon receiving a correct password.

Following are some other advantages, features and capabilities of the present invention:
- To provide additional security, the electronic device can encrypt the first password and the second password.
- Security can be further enhanced by using more than one password (e.g., electronic key); for instance, transmitting multiple passwords in a special sequence that can be chosen by the user.
- The user can select the mode by pressing a button or by moving a knob to a certain position and then pressing another button to transmit the password.
- The user can program the electronic device 102 to have separate key sequence for different password protected electronic devices. Here, the actual password is only known to the password protected electronic device being turned on (the target device) and the electronic device that is used to send the key (password) is just capable of generating the right keys. Again, security can be enhanced by programming the electronic device only to generate the programmed keys, i.e., the electronic device cannot be used to generate other passwords or keys.
- The user can physically input the password(s) into the password protected electronic device in the event the electronic device is not available (e.g., lost, misplaced) or not functioning (e.g., battery ran out).
- People that need to unlock/lock password protected electronic devices would have an easy, inexpensive way to do this without having to remember and physically input a password into the electronic device.
- The present invention is more convenient and cost effective for businesses to use when compared to a hard token which is used to send a password to a central location for access to corporate networks.
- The password entered directly into the password protected device could be different from the one stored in the electronic key device. This directly entered password can also be treated as a master password, which can be used to enable/disable the use of an electronic key device; this is useful in case, the electronic key device is lost or stolen.
- Programmability: some electronic devices can have permanent passwords (factory installed forever) while other electronic devices are programmable in that passwords can be changed as desired. In the latter case, the user decides the password and nobody else knows the password.
- Password(s) can be transmitted by a single key-press or a sequence of key-presses (with a fixed interval, or at different angles, or two separate keys...).
- If the password protected electronic device is capable of exchanging information with the electronic device used to transmit the password, then the device ID of the electronic device can also be transmitted upon request from the password protected electronic device or it can be transmitted along with the password. One possible scenario is provided below:
   First, the electronic key device transmits its ID to the password protected device.
   Second, the password protected device queries the electronic key device for a password; it also transmits its ID.
   Thirdly, the electronic key device selects the password for the identified device and transmits that password.
   Finally, the password protected device compares the received password with the stored password and then unlocks the password protected device (if they match).

An advantage of this scenario is that the user does not have to remember which way to turn, press or open a particular device. And, each device can have a different password since exchange of information is automatic, i.e., the user does not have to be aware of this.

Although several embodiments of the present invention has been illustrated in the accompanying Drawings and described in the foregoing Detailed Description, it should be understood that the invention is not limited to the embodiments disclosed, but is capable of numerous rearrangements, modifications and substitutions without departing from the spirit of the invention as set forth and defined by the following claims.

## Claims

1. An electronic device, comprising:
a controller for storing a first password; and
a radio for transmitting the stored first password towards a password protected electronic device, wherein the password protected electronic device uses the received first password to unlock itself such that a user does not have to physically input the first password into the password protected electronic device to unlock and use the password protected electronic device.

2. The electronic device of Claim 1, further comprising an operator interface used by the user to activate said radio to transmit the first password towards the password protected electronic device.

3. The electronic device of Claim 1, further comprising an operator interface used by the user to select the first password and to store the selected first password into said controller.

4. The electronic device of Claim 1, wherein the user interacts with the password protected electronic device to select the first password and transmit the selected first password to said radio for storage in said controller.

5. The electronic device of Claim 1, wherein a manufacturer of the electronic device and the password protected electronic device selects the first password and stores the selected first password In said controller and said password protected electronic device.

6. The electronic device of Claim 1, wherein:
said controller is further capable of storing a second password; and
said radio is further capable of transmitting the second password towards the password protected electronic device, wherein the password protected electronic device uses the received second password to lock itself such that the user does not have to physically input the second password into the password protected electronic device to lock the password protected electronic device.

7. The electronic device of Claim 1, wherein said electronic device is incorporated within a ring.

8. The electronic device of Claim 1, wherein said electronic device is incorporated within a watch.

9. The electronic device of Claim 1, wherein said password protected electronic device is a personal digital assistant.

10. The electronic device of Claim 1, wherein said password protected electronic device is a personal computer.

11. The electronic device of Claim 1, wherein said password protected electronic device is a wireless phone.

12. A method for using wireless technology to unlock a password protected electronic device, said method comprising the steps of:
storing a first password in an electronic device; and
activating the electronic device to wirelessly transmit the first password towards the password protected electronic device, wherein the password protected electronic device uses the received first password to unlock itself such that a user does not have to physically input the first password into the password protected electronic device to unlock and use the password protected electronic device.

13. The method of Claim 12, further comprising the step of encrypting the transmitted first password.

14. The method of Claim 12, wherein said step of storing further includes enabling the user to select the first password and to input the selected first password into the electronic device.

15. The method of Claim 12, wherein said step of storing further includes enabling the user to interact with the password protected electronic device to select the first password and to transmit the selected first password to the electronic device.

16. The method of Claim 12, wherein said step of storing further includes enabling a manufacturer to select the first password and to input the selected first password into the electronic device and the password protected electronic device.

17. The method of Claim 12, further comprising the steps of:
storing a second password in the electronic device; and
activating the electronic device to wirelessly transmit the second password towards the password protected electronic device, wherein the password protected electronic device uses the received second password to lock itself such that the user does not have to physically input the second password into the password protected electronic device to lock the password protected electronic device.

18. The method of Claim 12, wherein said first electronic device is incorporated within an article that the user generally has in their possession including a ring or a watch.

19. The method of Claim 12, wherein said password protected electronic device is a personal digital assistant.

20. The method of Claim 12, wherein said password protected electronic device is a personal computer.

21. The method of Claim 12, wherein said password protected electronic device is a wireless phone.

22. The method of Claim 12, wherein said wireless technology is Infra Red technology.

23. The method of Claim 11, wherein said wireless technology is Bluetooth technology.

24. A password protected electronic device, comprising:
a radio capable of receiving a password wirelessly transmitted from an electronic device; and
a controller capable of using the received password to unlock the password protected electronic device such that a user does not have to physically input the password into the password protected electronic device to unlock and use the password protected electronic device.

25. The password protected electronic device of Claim 24, wherein said electronic device is incorporated within a ring.

26. The password protected electronic device of Claim 24, wherein said electronic device is incorporated within a watch.

27. The password protected electronic device of Claim 24, wherein said password protected electronic device is a personal digital assistant.

28. The password protected electronic device of Claim 24, wherein said password protected electronic device is a personal computer.

29. The password protected electronic device of Claim 24, wherein said password protected electronic device is a wireless phone.

30. A system, comprising:
a first electronic device including:
a controller capable of storing a password; and
a radio capable of transmitting the password when activated by a user; and
a second electronic device including:
a controller capable of storing a password;
a radio capable of receiving the password from the first electronic device; and
said controller capable of determining whether the stored password matches the received password;
if there is a match, then the second device unlocks itself so that the user can use the second device;
if there is not a match, then the second device remains locked and the user can not use the second device.

31. The system of Claim 30, wherein said first electronic device further includes an operator interface used by the user to activate said radio to transmit the password towards the second electronic device

32. The system of Claim 30, wherein said first electronic device further includes an operator interface used by the user to select the password and to input the selected password into the first electronic device.

33. The system of Claim 30, wherein said second electronic device further includes an operator interface used by the user to select the password and to transmit the selected password to the first electronic device.

34. The system of Claim 30, wherein a manufacturer of the first electronic device and the second electronic device selects and inputs the password into the first electronic device and the second electronic device.

35. The system of Claim 30, wherein said first electronic device is incorporated within an article that the user generally has in their possession including a ring or a watch.

36. The system of Claim 30, wherein said second electronic device is a personal digital assistant, a personal computer, a laptop computer or a wireless phone.

37. A device, comprising:
a radio capable of transmitting at least one electronic key towards at least one electronic device, wherein each electronic key includes a password used to unlock or lock one of the electronic devices such that a user does not have to remember the password and does not have to physically input the password into the at least one electronic device to unlock or lock the at least one electronic device.

38. The device of Claim 37, wherein said electronic key is an encrypted electronic key.

39. The device of Claim 37, wherein said device is incorporated within an article that the user generally has in their possession including a ring or a watch.

40. The device of Claim 37, wherein said electronic device is a personal digital assistant, a personal computer or a wireless phone.
